# EUROPÄISCHE PATENTSCHRIFT

(11) **EP 0 967 486 B1**
(45) Veröffentlichungstag und Bekanntmachung des Hinweises auf die Patenterteilung: **23.07.2003**
(21) Anmeldenummer: 99109762.7
(22) Anmeldetag: 18.05.1999
(51) Int. Cl.: G01P 1/12, G07C 7/00, G07C 5/12, G01D 15/32

(54) **Führungsmittel für den Diagrammscheibenträger eines Fahrtschreibers**
Guiding means for a diagram disk carrier in a tachograph
Dispositif de guidage pour le support d'un disque-diagramme de tachographe

(30) Priorität: 04.06.1998 DE 19824841
(43) Veröffentlichungstag der Anmeldung: 29.12.1999
(73) Patentinhaber: SIEMENS AKTIENGESELLSCHAFT, 80333 München (DE)
(72) Erfinder: Säger, Benjamin, Dipl.-Ing.(FH), 78050 Villingen-Schwenningen (DE); Höni, Helmut, Dipl.-Ing.(FH), 78733 Aichhalden (DE)

(56) Entgegenhaltungen:
- EP-A- 0 794 499
- DE-A- 19 545 354
- DE-A- 19 635 965
- DE-U- 9 317 101

## Beschreibung

Die Erfindung betrifft Führungsmittel für den Diagrammscheibenträger eines Fahrtschreibers wobei der Fahrtschreiber gemäß der Patentanmeldung DE 198 04 647.2 A1 ein quaderförmiges Gehäuse aufweist und der Diagrammscheibenträger zwischen einer Registrierposition innerhalb des Gehäuses, in welcher der Diagrammscheibenträger spielfrei verriegelt ist und einer von außen zugänglichen Einlege-/Entnahmeposition, in welcher der Diagrammscheibeträger an einem Anschlag anliegt, bewegbar ist derart, daß der Diagrammscheibenträger zwischen der Registrierposition und einer Gelenkposition geräteintern verschiebbar und in der Gelenkposition um eine dem Diagrammscheibenträger zugeordnete Achse in die Einlege/Entnahmeposition verschwenkbar ist und daß als Führungsmittel an den Seitenwänden des Gehäuses befestigte Führungsschienen sowie in diesen verschiebbar gelagerte Gelenkschienen vorgesehen sind.

Die genannte DE-Schrift entspricht einer älteren europäischen Patentanmeldung, veröffentlicht als EP-A-0 935 220.

Ziel der oben genannten Patentanmeldung war es, einen Fahrtschreiber der gattungsgemäßen Art so umzugestalten, daß durch eine Verbesserung der Handhabung der Diagrammscheiben die Einbaumöglichkeiten in einem größeren Umfange genutzt werden können.

Die in der Hauptpatentanmeldung vorgeschlagene Lösung bietet, indem der Diagrammscheibenträger in der Gelenkposition verschwenkt werden kann, eine größere Freiheit was den Einbau des Fahrtschreibers in einer Fahrzeugkabine anbelangt. Im einzelnen ist vorgesehen dem Diagrammscheibenträger eine Schienenkombination bestehend aus gehäusefesten Führungsschienen und in diesen verschiebbar gelagerten Gelenkschienen zuzuordnen, wobei letztere in einer bestimmten Position verriegelbar sind und einer dem Diagrammscheibenträger zugeordneten Achse, die in die Gelenkschienen eingreift, als Lagerarme dienen.

Bei der in der Hauptpatentanmeldung dargestellten Lösung sind die Gelenkschienen als relativ flache Bauteile ausgebildet und für das Zusammenwirken mit der Achse mit jeweils einem Langloch versehen. In der bevorzugten ein verkantungsfreies Führen bietenden Ausführungsform, bei der die im Diagrammscheibenträger vorgesehene Achse als Welle mit aufgesetzten Ritzeln ausgebildet ist, ist zusätzlich eine Seite eines Langloches der Gelenkschienen verzahnt. Um eine hohe Führungsqualität zu erzielen, greifen die Ritzel außerdem in in den feststehenden Führungsschienen ausgebildete Verzahnungen ein. Diese Bauform ist jedoch mit dem Nachteil behaftet, daß infolge der geringen Bauhöhe des Gehäuses nur eine relativ geringe Breite der Gelenkschienen möglich und dadurch eine verringerte Steifigkeit gegeben ist. Hinzu kommt eine Schwächung der Gelenkschienen infolge der durch die Verzahnung bedingten Kerbwirkung, so daß die Gefahr des Verbiegens der Gelenkschienen bei unsachgemäßer Betätigung des Diagrammscheibenträgers besteht. Auch die Herstellung der Gelenk- und Führungsschienen in der geschilderten Bauform ist unvorteilhaft und die Montage erfordert aufwendige Justierarbeit bezüglich der Verzahnungen vom Gelenk- und Führungsschienen.

Der vorliegenden Erfindung liegt somit die Aufgabe zugrunde, die Führungsmittel für den Diagrammscheibenträger eines Fahrtschreibers gemäß der Hauptpatentanmeldung derart zu gestalten, daß bei unveränderten Abmessungen von Gehäuse und Diagrammscheibenträger sowohl die Eignung für eine Serienfertigung verbessert als auch die Stabilität erhöht sind.

Die Lösung der gestellten Aufgabe sieht vor, daß jede Gelenkschiene als flacher mit einer der Achse zugeordneten Nut versehener Körper ausgebildet ist.

Ein bevorzugtes Ausführungsbeispiel ist gemäß dem Anspruch 3 dadurch gekennzeichnet, daß die Gelenkschienen jeweils einen metallischen Träger aufweisen, an welchem ein rahmenartiger Kunststoffkörper angeformt ist. Weitere vorteilhafte Ausgestaltungen der Erfindung beschreiben die übrigen Unteransprüche.

Die Erfindung bietet, abgesehen von der Vermeidung eines gegenseitigen Justierens der Gelenk- und Führungsschienen sowie einer serienfreundlichen Festigung der Gelenkschienen, vorzugsweise in Outsert-Spritzgießtechnik, den Vorzug einer hohen Steifigkeit der Gelenkschienen infolge des verwendeten, nicht durch ein Langloch geschwächten metallischen Trägers und die an dem Träger in geeigneter Weise angebrachten Abkantungen. Durch die Beibehaltung des Prinzips der Zahnschienenführung ist außerdem eine exakte Führung des Diagrammscheibenträgers innerhalb des gesamten Verschiebebereichs gewährleistet. Hinzu kommt, daß die Laufbunde der Ritzel in den Nuten der Gelenkschienen mit geringem Spiel geführt sind und somit ein einwandfreies Abwälzen der Ritzel gegeben ist.

Ferner ist die Führungsqualität der Gelenkschienen infolge der verbreiterten und kantengerundeten Ausbildung sowie der Metall/Kunststoff-Lagerung erheblich verbessert. In diesem Zusammenhang sei erwähnt, daß die Gelenkschienen aus einem Kunststoffteil und einem metallischen Träger zusammengebaut, unter Umständen, das heißt, wenn die einwirkenden Kräfte dies gestatten, auch ausschließlich als Kunststoffteil hergestellt werden können.

Im folgenden sei die Erfindung anhand der Zeichnungen näher erläutert. Es zeigen:
- Figur 1,: eine vergrößerte Teildarstellung des erfindungsgemäßen Fahrtschreibers als teilweise freigeschnittene Seitenansicht mit herausgezogenem und verschwenktem Diagrammscheibenträger,
- Figur 2,: eine perspektivische Darstellung einer Gelenkschiene,
- Figur 3,: eine Teildarstellung der Gelenkschiene gemäß Figur 2 mit einer Zuordnung eines mit der Gelenkschiene verbindbaren Anschlagelementes in perspektivischer Darstellung,
- Figur 4,: eine Schnittdarstellung der Führungsmittel in Zuordnung zum Gehäuse und zum Diagrammscheibenträger.

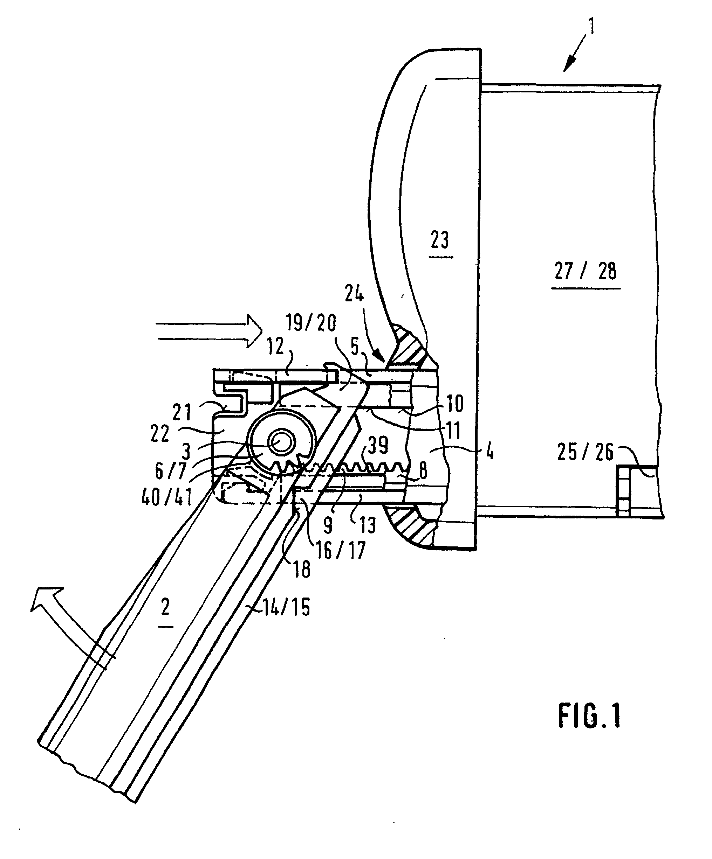

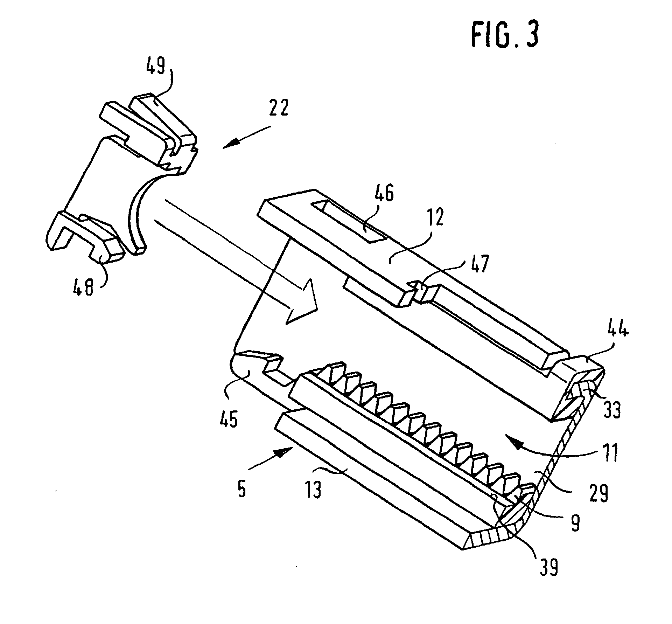

Die Figur 1, die im wesentlichen der Figur 3 des Hauptpatentes entspricht, zeigt einen Fahrtschreiber mit einem quaderförmigen Gehäuse 1 und einem Diagrammscheibenträger 2, welcher gegenüber der Führungsebene innerhalb des Fahrtschreibers um einen bestimmten Winkel verschwenkt ist und sich, was die als Aufzeichnungsträger dienenden, nicht dargestellten Diagrammscheiben anbelangt, in der Einlege-/Entnahmeposition befindet. Das heißt, eine Achse, um die der Diagrammscheibenträger 2 drehbar ist beziehungsweise eine Stützwelle 3, auf der der Diagrammscheibenträger 2 drehbar gelagert ist und auf der sich der Diagrammscheibenträger 2 in der Registrierposition abstützt, befindet sich in einer stabilen Gelenkposition außerhalb des Gehäuses 1, wobei die Gelenkposition durch im Gehäuse 1 verschiebbar gelagerte Gelenkschienen 4, 5 vorgegeben ist, die in der Gelenkposition in geeigneter Weise verriegelt sind. Wie aus der Figur 1 ferner hervorgeht sind zur Erzielung einer verkantungsfreien Führung auf der Stützwelle 3 beidseitig Ritzel 6, 7 befestigt und diesen in den Gelenkschienen 4, 5 ausgebildete Verzahnungen 8, 9 zugeordnet, wobei, was im folgenden noch näher erläutert wird, die Verzahnungen 8, 9 jeweils innerhalb einer in jeder Gelenkschiene 4, 5 ausgebildeten Nut 10, 11, und zwar an einer Seitenwand der jeweiligen Nut 10, 11 vorgesehen sind.

Wie bereits in der Hauptpatentanmeldung beschrieben ist, sind an den Gelenkschienen 4, 5 Führungsleisten 12, 13 angeformt, die mit am Diagrammscheibenträger 2 vorgesehenen Freischnitten 14, 15 zusammenwirken. Außerdem sind im Diagrammscheibenträger 2 Aussparungen 16, 17 vorgesehen, an denen Anschlagflächen 18 ausgebildet sind. Letztere wirken in der in Figur 1 gezeigten Anschlagstellung mit nicht bezeichneten Stirnflächen der Führungsleisten 13 zusammen. Zusätzlich stehen in der Anschlagstellung am Diagrammscheibenträger 2 angeformte Fangarme 19, 20 mit den Führungsleisten 12 in Wirkverbindung. Mit 21 sind an den Gelenkschienen 4, 5 stirnseitig angebrachte Schlitze bezeichnet, denen zur Schaffung einer spielfreien Verbindung zwischen den Gelenkschienen 4, 5 und dem Diagrammscheibenträger 2 am Diagrammscheibenträger 2 angeformte Stege zugeordnet sind. Ein mit 22 bezeichnetes, im folgenden Anschlagelement genanntes Bauteil dient dem stirnseitigen Abschluß der Gelenkschienen 4, 5 und ist über Rastmittel an letzteren befestigbar.

Der Vollständigkeit halber sei noch erwähnt, daß an einer mit dem Gehäuse 1 verbundenen Frontwand 23, eine Öffnung 24 vorgesehen ist, die ein Heraustreten der Gelenkschienen 4, 5 und ein Herausziehen des Diagrammscheibenträgers 2 ermöglicht und die mittels einer an dem Diagrammscheibenträger 2 frontseitig angebrachten Blende abdeckbar ist. Mit 25, 26 sind in den Seitenwänden 27, 28 des Gehäuses 1 vertieft liegend ausgebildete Begrenzungsanschläge für Sperrfedern bezeichnet, welche an einem dem Einbau des Fahrtschreibers dienenden Rahmen ausgebildet sind. Zum Ausbau des Fahrtschreibers aus dem betreffenden Armaturenbrett können die Sperrfedern nach dem Abnehmen der Frontwand 23 mittels eines flachen Werkzeuges angehoben werden.

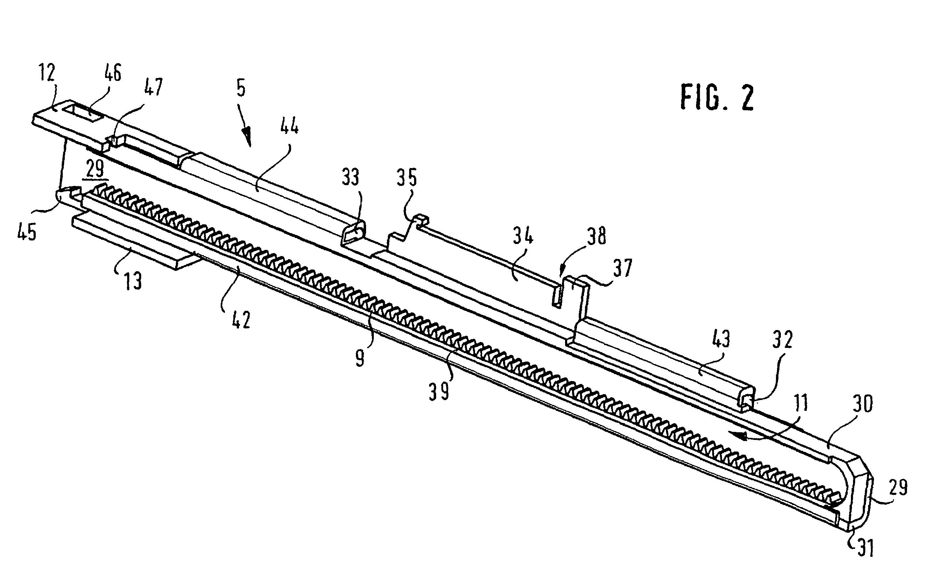

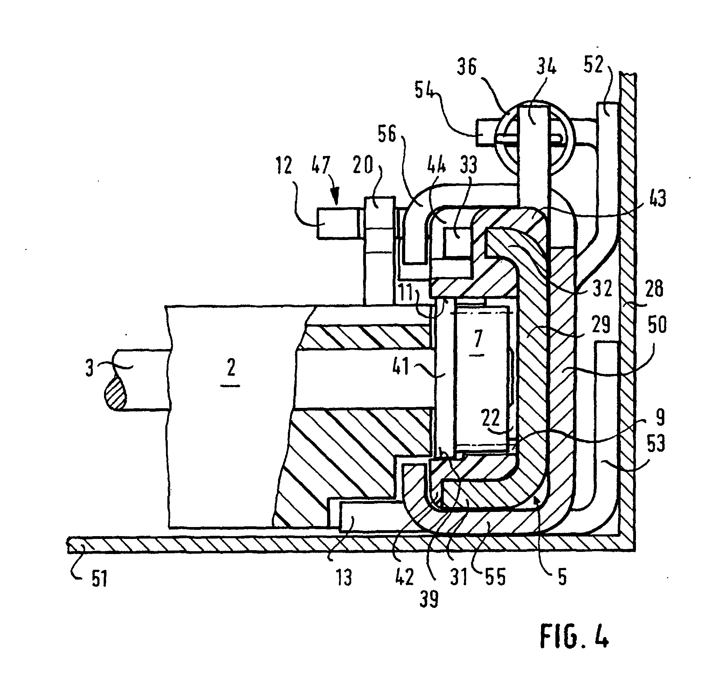

Wie aus den Figuren 2 und 3 ersichtlich ist, stellt die Gelenkschiene 5 und spiegelbildlich auch die Gelenkschiene 4 ein aus einem metallischen Träger 29 und einem Kunststoffkörper 30 bestehendes Verbundteil dar, das vorzugsweise in Outsert-Spritzgießtechnik hergestellt wird. Für den Träger 29 ist Flachmaterial verwendet, an welchem wenigstens an der einen Seite weitgehend durchgehend ein versteifender Schenkel 31 angebogen ist. Der Träger 29 bietet somit im Bereich der Nut 11 eine geschlossene Wandfläche, mit anderen Worten, er stellt einen ununterbrochenen Boden der Nut dar. An der Gegenseite des Schenkels 31 sind bereichsweise Zungen 32 und 33 abgekantet. Ferner sind die Führungsleisten 12, 13 an dem Träger 29 ausgebildet. Ein in der Hauptebene des Trägers 29 liegender Abschnitt 34 dient mit einem daran ausgebildeten Haken 35 dem Einhängen einer die Gelenkschiene 5 in die Gelenkposition führenden Zugfeder 36 (Figur 4) und mit einem vor einem Pfeiler 37 ausgebildeten Schlitz 38 dem Positionieren und Verriegeln der Gelenkschiene 5. Der angeformte Kunststoffkörper 30 stellt im wesentlichen einen Rahmen dar, der zusammen mit dem Träger 29 die Nut 11 bildet, an deren einer Seitenwand die Verzahnung 9 ausgebildet ist. Parallel zu der Verzahnung 9 ist ein Sims 39 angeformt, der als Auflagefläche für an den Ritzeln 6, 7 ausgebildeten Laufbunden 40, 41 dient. Eine angeformte stirnseitige Verkleidung 42 des Schenkels 31 dient der Verbesserung der Gleiteigenschaften der Gelenkschiene 5. Gleiches gilt für die Ummantelungen 43 und 44 der Zungen 32 und 33. Mit 45 ist eine dem Anschlagelement 22 zugeordnete Rastnase bezeichnet; eine in der Führungsleiste 12 vorgesehene Aussparung 46 dient ebenfalls der Befestigung des Anschlagelementes 22 an der Gelenkschiene 5. Ein Einschnitt 47 bildet eine Fassung für den Fangarm 20 des Diagrammscheibenträgers 2. Das auf die Gelenkschiene 5 aufsteckbare Anschlagelement 22 wird gesetzt, wenn die Stützwelle 3 des Diagrammscheibenträgers 2 bzw. die Ritzel 6, 7 in die Gelenkschienen 4, 5 eingeführt sind. An dem Anschlagelement 22 ausgebildete Riegel 48 und 49 wirken dabei mit der Rastnase 45 und der Aussparung 46 zusammen.

Die Schnittdarstellung, Figur 4, zeigt insbesondere die Lagerung der Gelenkschiene 5 in einer Führungsschiene 50, die als Blech-Biegeteil ausgebildet ist, am Boden 51 des Gehäuses 1 aufsitzt und mittels Laschen, von denen in Figur 4 zwei 52 und 53 dargestellt sind, mit der Seitenwand 28 fest verbunden ist. Mit 54 ist ein an der Führungsschiene 50 angeformter Arm bezeichnet, der der Zugfeder 36 zugeordnet ist. Zur Lagerung der Gelenkschiene 5 weist die Führungsschiene 50 einerseits eine u-förmig ausgebildete Führungsrinne 55 und den ummantelten Zungen 32, 33 zugeordnete, im wesentlichen der seitlichen Führung dienende Halter auf, von denen einer in der Figur 4 sichtbar und mit 56 bezeichnet ist. Ferner ist aus der Figur 4 ersichtlich, daß die erfindungsgemäße Gelenkschiene 5 einen breiten Zahneingriff ermöglicht und zwischen dem Laufbund 41 und den Seitenwänden der Nut 11 eine relativ eng tolerierte Spielpassung vorgesehen werden kann.

## Patentansprüche

1. Führungsmittel für den Diagrammscheibenträger eines Fahrtschreibers wobei der Fahrtschreiber ein quaderförmiges Gehäuse aufweist und der Diagrammscheibenträger zwischen einer Registrierposition innerhalb des Gehäuses, in welcher der Diagrammscheibenträger spielfrei verriegelt ist und einer von außen zugänglichen Einlege-/Entnahmeposition, in welcher der Diagrammscheibeträger an einem Anschlag anliegt, bewegbar ist derart, daß der Diagrammscheibenträger zwischen der Registrierposition und einer Gelenkposition geräteintern verschiebbar und in der Gelenkposition um eine dem Diagrammscheibenträger zugeordnete Achse in die Einlege/Entnahmeposition verschwenkbar ist und daß als Führungsmittel an den Seitenwänden des Gehäuses befestigte Führungsschienen sowie in diesen verschiebbar gelagerte Gelenkschienen vorgesehen sind,
**dadurch gekennzeichnet,**
**daß** jede Gelenkschiene (4, 5) als flacher mit einer der Achse zugeordneten Nut (10, 11) versehener Körper ausgebildet ist.

2. Führungsmittel nach Anspruch 1,
**dadurch gekennzeichnet,**
**daß** an jeweils einer Seitenwand der Nut der Gelenkschienen (4, 5) eine Verzahnung (8, 9) ausgebildet ist, welche auf einer als Achse dienenden Stützwelle (3) befestigten Ritzeln (6, 7) zugeordnet ist.

3. Führungsmittel nach Anspruch 1,
**dadurch gekennzeichnet,**
**daß** die Gelenkschienen (4, 5) jeweils einen metallischen Träger (29) aufweisen, an welchem ein rahmenartiger Kunststoffkörper (30) angeformt ist.

4. Führungsmittel nach Anspruch 3,
**dadurch gekennzeichnet,**
**daß** an dem jeweiligen Kunststoffkörper (30) eine Verzahnung (8, 9) und ein diesem zugeordneter Sims (39) ausgeformt sind, wobei die Simse (39) Auflageflächen für an den Ritzeln (6, 7) angeformte Laufbunde (40, 41) bilden.

5. Führungsmittel nach Anspruch 3,
**dadurch gekennzeichnet,**
**daß** die Breite der Nute (10, 11) im wesentlichen gleich ist dem Durchmesser der Laufbunde (40, 41).

6. Führungsmittel nach Anspruch 1,
**dadurch gekennzeichnet,**
**daß** die Nute (10, 11) der Gelenkschienen (4, 5) einseitig offen ausgebildet sind und
**daß** die Nute (10, 11) schließende, mit den Gelenkschienen (4, 5) verbindbare Anschlagelemente (22) vorgesehen sind.

7. Führungsmittel nach Anspruch 1,
**dadurch gekennzeichnet,**
**daß** die die Gelenkschienen (4, 5) lagernden Führungsschienen (50) als Blech-Biegeteile ausgebildet und an den Seitenwänden (27, 28) des Gehäuses (1) befestigt sind.

## Claims

1. Guide means for the tachograph-disc carrier of a tachograph, the tachograph having a cuboidal housing, and the tachograph-disc carrier being moveable within the housing between a recording position, in which the tachograph-disc carrier is locked in a play-free manner, and an insertion/removal position which is accessible from the outside and in which the tachograph-disc carrier bears against a stop, in such a manner that the tachograph-disc carrier can be displaced inside the appliance between the recording position and an articulated position and, in the articulated position, can be pivoted about an axis, which is assigned to the tachograph-disc carrier, into the insertion/removal position, and that guide rails fastened to the side walls of the housing and articulated rails mounted displaceably in the said guide rails are provided as guide means, **characterized in that** each articulated rail (4, 5) is designed as a flat body provided with a groove (10, 11) assigned to the axis.

2. Guide means according to Claim 1, **characterized in that** a toothing (8, 9) is formed on in each case one side wall of the groove of the articulated rails (4, 5) and is assigned to pinions (6, 7) fastened on a supporting shaft (3) which serves as the axis.

3. Guide means according to Claim 1, **characterized in that** the articulated rails (4, 5) each have a metallic carrier (29) on which a frame-like plastic body (30) is integrally formed.

4. Guide means according to Claim 3, **characterized in that** a toothing (8, 9) and a moulding (39) assigned to it are formed on the respective plastic body (30), the mouldings (39) forming bearing surfaces for moving collars (40, 41) integrally formed on the pinions (6, 7).

5. Guide means according to Claim 3, **characterized in that** the width of the grooves (10, 11) is essentially the same as the diameter of the moving collars (40, 41).

6. Guide means according to Claim 1, **characterized in that** the grooves (10, 11) of the articulated rails (4, 5) are designed such that they are open on one side, and **in that** the grooves (10, 11) are provided [lacuna] closing stop elements (22) which can be connected to the articulated rails (4, 5).

7. Guide means according to Claim 1, **characterized in that** the guide rails (50) supporting the articulated rails (4, 5) are designed as bent sheet-metal parts and are fastened to the side walls (27, 28) of the housing (1).

## Revendications

1. Moyens de guidage pour support de diagramme circulaire d'un tachygraphe, le tachygraphe présentant un boîtier de forme parallélépipédique et le support de diagramme circulaire étant mobile entre une position d'enregistrement à l'intérieur du boîtier, dans laquelle le support de diagramme circulaire est verrouillé sans jeu, et une position de placement/prélèvement accessible de l'extérieur, dans laquelle le support de diagramme circulaire se trouve contre une butée, de telle sorte que le support de diagramme circulaire est mobile en translation à l'intérieur du dispositif entre la position d'enregistrement et une position articulée et est orientable dans la position articulée autour d'un axe associé au support de diagramme circulaire dans la position de placement/prélèvement, et que des rails de guidage fixés aux parois latérales du boîtier ainsi que des rails articulés logés et mobiles en translation dans ceux-ci sont prévus comme moyens de guidage,
**caractérisés en ce que** chaque rail articulé (4, 5) est formé par un corps plat pourvu d'une rainure (10, 11) associée à l'axe.

2. Moyens de guidage selon la revendication 1, **caractérisés en ce que** un engrènement (8, 9) est formé au niveau d'une des parois latérales de la rainure des rails articulés (4, 5), lequel engrènement est apparié à des pignons (6, 7) fixés sur un arbre support (3) faisant office d'axe.

3. Moyens de guidage selon la revendication 1, **caractérisés en ce que** les rails articulés (4, 5) présente chacun un support métallique (29) sur lequel est formé un corps en matière synthétique (30) en forme de cadre.

4. Moyens de guidage selon la revendication 3, **caractérisés en ce que** sur chacun des corps en matière synthétique (30) sont formés un engrènement (8, 9) et un rebord (39) associé, les rebords (39) formant des surfaces d'appui pour des collets de glissement (40, 41) épousant les pignons (6, 7).

5. Moyens de guidage selon la revendication 3, **caractérisés en ce que** la largeur de la rainure (10, 11) est essentiellement identique au diamètre des collets de glissement (40, 41),

6. Moyens de guidage selon la revendication 1, **caractérisés en ce que** la rainure (10, 11) des rails articulés (4, 5) est ouverte d'un côté et que la rainure (10, 11) dispose d'éléments butoirs (22) de verrouillage, pouvant être raccordés aux rails articulés (4, 5).

7. Moyens de guidage selon la revendication 1, **caractérisés en ce que** les rails de guidage (50) logeant les rails articulés (4, 5) consistent en des pièces en tôle pliées, fixées aux parois latérales (27, 28) du boîtier (1).
